# FASCICULE DE BREVET EUROPEEN

(11) **EP 2 831 705 B1**
(45) Date de publication et mention de la délivrance du brevet: **22.07.2020**
(21) Numéro de dépôt: 13713188.4
(22) Date de dépôt: 28.03.2013
(51) Int. Cl.: G06F 3/03

(54) **ECRAN AVEC LOCALISATION D'OBJET MAGNETIQUE**
BILDSCHIRM MIT MAGNETISCHER OBJEKTFINDUNG
SCREEN WITH MAGNETIC OBJECT LOCATING

(30) Priorité: 29.03.2012 FR 1252879
(43) Date de publication de la demande: 04.02.2015
(73) Titulaire: Commissariat à l'Énergie Atomique et aux Énergies Alternatives, 75015 Paris (FR)
(72) Inventeur: HAUTSON, Tristan, F-38000 Grenoble (FR); JOBERT, Timothée, F-38000 Grenoble (FR); VALLEJO, Jean-Luc, F-38000 Grenoble (FR)
(74) Mandataire: GIE Innovation Competence Group
(86) Numéro de dépôt international: PCT/EP2013/056809
(87) Numéro de publication internationale: WO 2013/144337

(56) Documents cités:
- WO-A2-2005/024620
- FR-A1- 2 586 302
- FR-A1- 2 952 450
- YABUKAMI S ET AL: "Motion Capture System of Magnetic Markers Using Three-Axial Magnetic Field Sensor", IEEE TRANSACTIONS ON MAGNETICS, IEEE SERVICE CENTER, NEW YORK, NY, US, vol. 36, no. 5, 1 novembre 2000 (2000-11-01), XP011033261, ISSN: 0018-9464

## Description

L'invention concerne un écran et un procédé de commande de cet écran. L'invention concerne également un support d'enregistrement d'informations pour la mise en œuvre du procédé.

Des écrans connus comportent :
- une dalle transparente,
- une couche de génération de photons pour former chaque pixel lumineux visible à travers la dalle transparente, cette couche étant logée derrière la dalle transparente,
- une interface homme/machine apte à commander la couche de génération de photons pour modifier l'affichage d'une image par l'écran.

Dans de nombreux cas, l'interface homme/machine est réalisée sous la forme d'un écran tactile, c'est-à-dire qui peut être commandé en touchant avec un doigt l'écran. Ce type d'interface présente de grand avantage en terme d'ergonomie et de simplicité d'utilisation. Toutefois, le contact du doigt sur l'écran finit inévitablement par salir l'écran.

L'interface homme/machine peut également comporter un dispositif de localisation d'une source de champ magnétique alternatif librement déplaçable par l'utilisateur. Dans ce cas, c'est le déplacement de la source de champ magnétique alternatif qui permet de commander l'affichage de l'écran. Ce type d'interface présente l'avantage qu'il n'y a pas de contact direct avec l'écran de sorte que les salissures de l'écran sont limitées. Par contre, il est nécessaire d'alimenter la source de champ magnétique alternatif pour qu'elle fonctionne. Cela complexifie la réalisation de ce type d'interface car il faut prévoir :
- soit une alimentation par couplage électromagnétique comme dans la demande WO2005/024620A2,
- soit une pile ou une batterie logée dans la source de champ magnétique alternatif comme dans la demande FR2586302A1.

La demande WO2005/024620A2 divulgue le préambule des revendications 1 et 8. De l'état de la technique est également connu de CN10 136 1660A et de FR2952450A1 et de S. Yabukami et Al, « Motion Capture System of Magnetic Markers Using Three-axial Magnetic Field Sensor », IEEE Service center, New York, vol. 36, n°5, 1 novembre 2000.

L'invention vise à remédier à ce problème en proposant un écran équipé d'une interface qui limite les salissures de l'écran tout en restant simple à réaliser.

A cet effet, l'invention propose un écran conforme à la revendication 1.

Dans l'écran ci-dessus, il n'est plus nécessaire que l'utilisateur touche avec son doigt l'écran. Les salissures de l'écran sont donc limitées. Cependant, cette interface reste simple à réaliser car l'utilisateur n'a qu'à manipuler un aimant permanent. Dès lors, les problèmes alimentation d'une source de champ magnétique alternatif sont évités. De plus, l'utilisation de cette interface reste similaire à celle que l'on peut expérimenter avec un écran tactile sauf que le contact avec l'écran n'est pas nécessaire. Cette interface présente donc les mêmes avantages qu'un écran tactile.

L'interface proposée ci-dessus présente même des avantages supplémentaires. Par exemple, la zone d'interaction entre l'utilisateur et l'écran est plus étendue. En particulier, elle n'est pas limitée à la surface de l'écran mais s'étend, dans le même plan que l'écran, au-delà de sa périphérie.

L'utilisation d'un réseau de magnétomètres permet de localiser très précisément l'objet magnétique.

Les modes de réalisation de cet écran peuvent comporter une ou plusieurs des caractéristiques des revendications dépendantes.

Ces modes de réalisation de l'écran présentent en outre les avantages suivants :
- utiliser un grand nombre de magnétomètres permet d'accroître la précision de la localisation de l'objet magnétique devant la dalle ;
- répartir les magnétomètres dans une bande autour de la couche de génération de photons permet d'éviter que la localisation de l'objet magnétique soit perturbée par la présence de matériau magnétique dans la couche de génération de photons ;
- l'élimination des magnétomètres les plus proches ou les plus éloignés de l'objet magnétique permet de réduire la puissance de calcul nécessaire pour localiser cette objet.

L'invention a également pour objet un ensemble conforme à la revendication 7.

L'invention a également pour objet un procédé de commande de l'affichage de l'écran ci-dessus conforme à la revendication 8.

Les modes de réalisation de ce procédé de commande peuvent comporter une ou plusieurs des caractéristiques des revendications dépendantes de procédé.

Ces modes de réalisation du procédé présentent en outre l'avantage suivant :
- la non-alimentation des magnétomètres éliminés permet de diminuer la consommation électrique du réseau de magnétomètres.

L'invention a également pour objet un support d'enregistrement d'informations comportant des instructions pour la mise en œuvre du procédé de commande ci-dessus, lorsque ces instructions sont exécutées par un calculateur électronique.

L'invention sera mieux comprise à la lecture de la description qui va suivre, donnée uniquement à titre d'exemple non limitatif et faite en se référant aux dessins, sur lesquels :
- la figure 1 est une illustration schématique d'une interface homme/machine permettant de commander un écran,
- la figure 2 est une illustration partielle en vue de dessus d'un réseau de magnétomètres mis en œuvre dans l'interface homme/machine de la figure 1 ;
- la figure 3 est un organigramme d'un procédé de commande d'un écran à l'aide de l'interface homme/machine de la figure 1,
- la figure 4 est une illustration schématique et en perspective d'un écran incorporant une interface homme/machine similaire à celle de la figure 1,
- la figure 5 est une illustration schématique et en vue de face d'un autre mode de réalisation de l'écran de la figure 4.

Dans ces figures, les mêmes références sont utilisées pour désigner les mêmes éléments.

Dans la suite de cette description, les caractéristiques et fonctions bien connues de l'homme du métier ne sont pas décrites en détails.

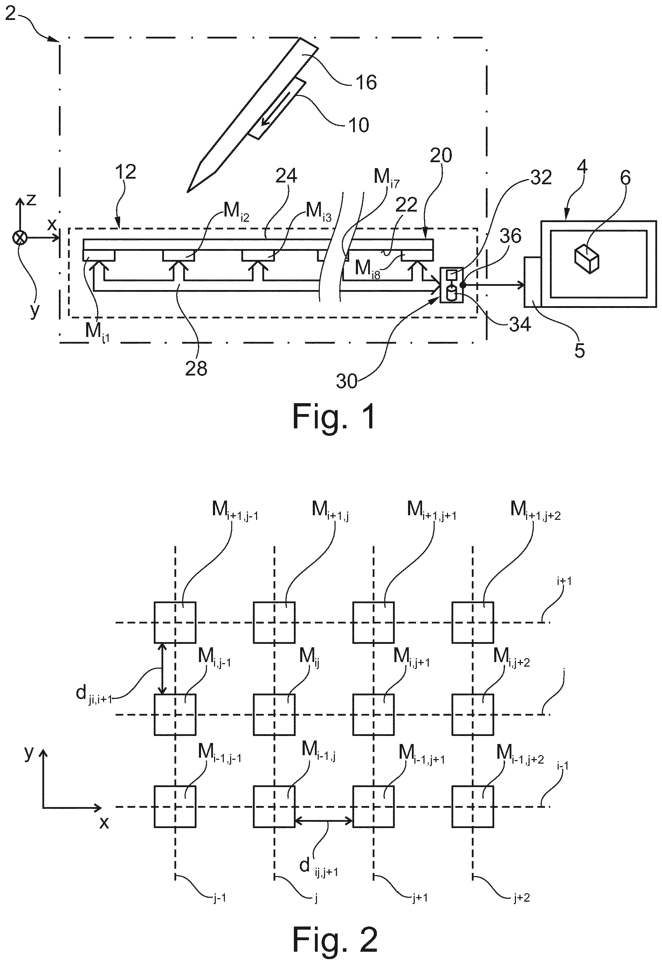

La figure 1 représente une interface homme/machine 2 d'un écran 4. Ici, l'écran 4 est raccordé à une unité de commande 5 capable de commander l'affichage d'une image sur cet écran 4. Pour simplifier la figure 1, les différents éléments de l'écran 4, c'est-à-dire l'interface 2 et l'unité 5 sont représentés les uns à côté des autres.

Ici, le fonctionnement de l'interface homme/machine 2 est illustré dans le cas où l'unité 5 commande la position et l'orientation d'un curseur 6 sur l'écran 4. Par exemple, le curseur a une forme tridimensionnelle. Sur la figure 1, le curseur 6 est un parallélépipède. Toutefois, l'interface 2 est utilisable pour acquérir de nombreuses autres commandes de l'utilisateur.

L'interface 2 comporte un objet magnétique 10 et un dispositif 12 de localisation de cet objet 10. L'objet 10 est librement déplaçable dans un repère orthogonal XYZ fixé sans aucun degré de liberté au dispositif 12. Ici, les directions X et Y sont horizontales et la direction Z est verticale.

Par exemple, l'objet 10 est un aimant permanent présentant un moment magnétique non nul même en absence de champ magnétique extérieur. Par exemple, le champ magnétique coercitif de cet aimant est supérieur à 100 A.m⁻¹ ou 500 A.m⁻¹. Par exemple, il est réalisé en matériau ferro- ou ferrimagnétique.

L'objet 10 a une forme oblongue. Sur la figure 1, la direction du moment magnétique de l'objet 10 est représentée par une flèche parallèle à la direction longitudinale de cet objet. La plus grande longueur de cet objet est notée L par la suite. La puissance de l'aimant permanent est typiquement supérieure à 0,01 A.m² ou 0,1 A.m².

Dans ce mode de réalisation, l'objet 10 est fixé sans aucun degré de liberté sur un ustensile 16 non magnétique. Par non magnétique, on entend un ustensile réalisé dans un matériau ne présentant aucune propriété magnétique mesurable.

L'ustensile 16 peut être localisé à partir de la position de l'objet 10. L'ustensile 16 permet aussi de faciliter la manipulation de l'objet 10 si celui-ci est petit. Typiquement, la combinaison de l'objet 10 et de l'ustensile 16 est librement déplaçable directement par la main d'un être humain dans le repère XYZ. A cet effet, cette combinaison pèse moins d'un kilo et, de préférence, moins de 200g. Les dimensions de cette combinaison sont suffisamment réduites pour pouvoir être saisie et déplacée par une seule main d'un utilisateur. Par exemple, l'ustensile 16 est un crayon en bois ou en plastique ou une bague. Dans le cas d'une bague, celle-ci est destinée à être portée au doigt de l'utilisateur.

Le dispositif 12 permet de localiser l'objet 10 dans le repère XYZ. Par localisation, on entend ici la détermination de la position x, y, z de l'objet 10 dans le repère XYZ et aussi la détermination de l'orientation de l'objet 10 par rapport aux axes X, Y et Z du repère XYZ. Par exemple, l'orientation de l'objet 10 est représentée par les angles θₓ, θ_{y} et θ_{z} du moment magnétique de l'objet 10, respectivement, par rapport aux axes X, Y et Z du repère.

Le dispositif 12 comporte un réseau de N magnétomètres tri-axes Mᵢⱼ. Sur la figure 1, les traits ondulés verticaux indiquent qu'une partie du dispositif 12 n'a pas été représentée.

Un magnétomètre tri-axe est un magnétomètre apte à mesurer la projection du champ magnétique sur trois axes de mesure non colinéaires. Un tel magnétomètre mesure la direction du champ magnétique. De plus, généralement, ce magnétomètre mesure également l'amplitude ou la norme du champ magnétique.

Typiquement, N est supérieur à cinq et, de préférence, supérieur à seize ou trente-deux. Ici, N est supérieur ou égal à soixante-quatre.

Dans ce mode de réalisation, les magnétomètres Mᵢⱼ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre Mᵢⱼ. Sur la figure 1, seuls les magnétomètres Mᵢ₁, Mᵢ₂, Mᵢ₃, Mᵢ₇ et Mᵢ₈ d'une ligne i sont visibles. La position des magnétomètres Mᵢⱼ les uns par rapport aux autres est décrite plus en détail en référence à la figure 2.

Chaque magnétomètre Mᵢⱼ est fixé sans aucun degré de liberté aux autres magnétomètres. A cet effet, les magnétomètres Mᵢⱼ sont fixés sans aucun degré de liberté sur une face arrière 22 d'une plaque rigide 20. Cette plaque rigide présente une face avant 24 tournée vers l'objet 10. La plaque 20 est réalisée dans un matériau non magnétique rigide. Par exemple, la plaque 20 est en verre et constitue la dalle de l'écran 4.

Chaque magnétomètre Mᵢⱼ mesure la direction et l'intensité du champ magnétique généré par l'objet 10. Pour cela, chaque magnétomètre Mᵢⱼ mesure la norme de la projection orthogonale du champ magnétique généré par l'objet 10 au niveau de ce magnétomètre Mᵢⱼ sur trois axes de mesure de ce magnétomètre. Ici, ces trois axes de mesure sont orthogonaux entre eux. Par exemple, les axes de mesure de chacun des magnétomètres Mᵢⱼ sont, respectivement, parallèles aux axes X, Y et Z du repère. La sensibilité du magnétomètre Mᵢⱼ est par exemple de 4^{∗}10⁻⁷T.

Chaque magnétomètre Mᵢⱼ est raccordé par l'intermédiaire d'un bus 28 de transmission d'informations à une unité de traitement 30.

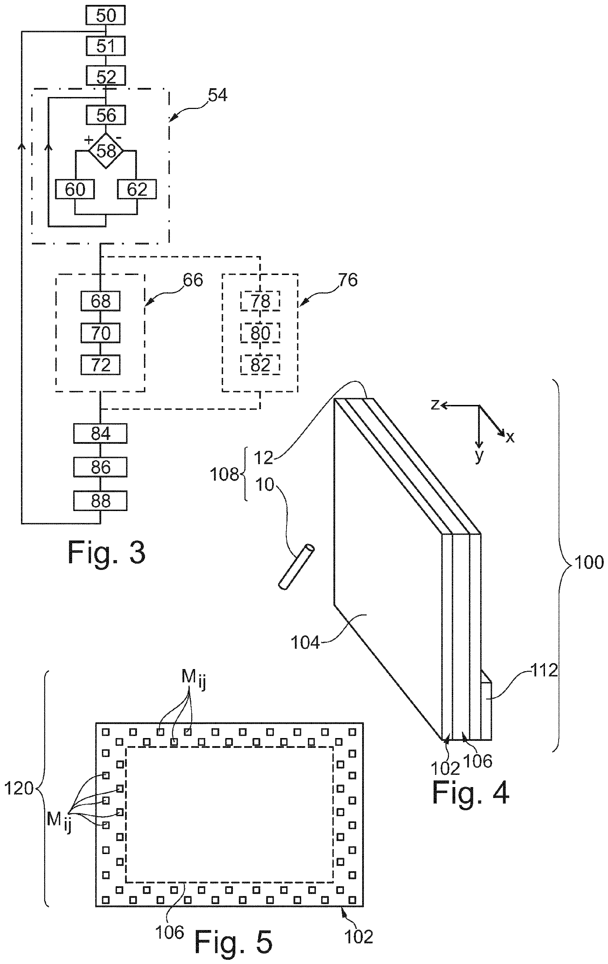

L'unité de traitement 30 est capable de déterminer la position et l'orientation de l'objet 10 dans le repère XYZ à partir des mesures des magnétomètres Mᵢⱼ. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 3. En particulier, l'unité 30 implémente un modèle mathématique associant chaque mesure d'un magnétomètre Mᵢⱼ à la position, l'orientation et l'amplitude d'un dipôle magnétique correspondant à l'objet 10 dans le repère XYZ. Ce modèle se présente donc sous la forme d'un système d'équations dans lequel la position, l'orientation et l'amplitude du dipôle magnétique sont les inconnues et les mesures des magnétomètres Mᵢⱼ ainsi que leurs positions sont connues. Par exemple, ce système d'équations est résolu à l'aide d'un filtre de Kalman étendu. Ce modèle est typiquement construit à partir des équations physiques de l'électromagnétisme. Pour construire ce modèle, l'objet 10 est approximé par un dipôle magnétique. Cette approximation n'introduit que très peu d'erreurs si la distance entre l'objet 10 et le magnétomètre Mᵢⱼ est supérieure à 2L et, de préférence, supérieure à 3L, où L est la plus grande dimension de l'objet 10. Typiquement, L est inférieur à 20cm et, de préférence, inférieur à 10 ou 5cm.

L'unité 30 est également capable de restituer la position et l'orientation mesurée de l'objet 10 sur une interface 36.

L'unité 5 de commande est raccordée à l'unité 30 par l'intermédiaire de cette interface 36.

La figure 2 représente une partie des magnétomètres Mᵢⱼ du dispositif 12. Ces magnétomètres Mᵢⱼ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre Mᵢⱼ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres Mᵢⱼ et M_{i,j+1} immédiatement consécutifs le long d'une ligne i sont séparés par une distance connue d_{i,j},ⱼ₊₁. De façon similaire, le centre de deux magnétomètres Mᵢⱼ et M_{i+1,,j} immédiatement consécutifs le long d'une même colonne j sont séparés par une distance connue d_{j,i},ᵢ₊₁.

Dans le cas particulier décrit ici, quelle que soit la ligne i, la distance d_{i,j},ⱼ₊₁ est la même. Cette distance est donc notée dⱼ. De façon similaire, quelle que soit la colonne j, la distance d_{j,i},ᵢ₊₁ entre deux magnétomètres est la même. Cette distance est donc notée dᵢ.

Ici, les distances dᵢ et dⱼ sont toutes les deux égales à d.

Typiquement, la distance d est comprise entre 1 et 4 cm lorsque :
- la puissance de l'aimant permanent est de 0,5 A.m²,
- la sensibilité des magnétomètres est de 4^{∗}10⁻⁷T, et
- le nombre de magnétomètres Mᵢⱼ est de soixante-quatre.

Le fonctionnement de l'écran 4 et de son interface 2 va maintenant être décrit en référence au procédé de la figure 3.

Initialement, lors d'une étape 50, le filtre de Kalman étendu est initialisé en faisant l'hypothèse que l'objet 10 est au centre du réseau de magnétomètres et en prenant une orientation quelconque fixée pour cet objet 10. Par exemple, initialement, on considère que l'objet 10 est horizontal.

Ensuite, les étapes suivantes sont réitérées pour réaliser chaque localisation de l'objet 10 devant l'écran 4. Les différentes localisations de l'objet 10 permettent de relever son déplacement.

Lors d'une étape 51, les magnétomètres saturés par le champ magnétique de l'objet 10 sont éliminés. Un magnétomètre saturé est un magnétomètre dont la mesure ne varie plus si l'on approche encore plus l'objet 10 de ce magnétomètre. Lorsqu'un magnétomètre est saturé, il délivre un signal de mesure caractéristique connu différent de ceux susceptibles d'être délivrés lorsqu'il n'est pas saturé. Dès lors, lors de l'étape 51, le calculateur 32 identifie les magnétomètres saturés à partir du signal de mesure délivré par chacun d'entre eux. Les magnétomètres identifiés comme « saturés » sont marqués comme étant éliminés. Par exemple, à cet effet, un identifiant de ce magnétomètre est ajouté dans une liste de magnétomètres éliminés. Dans cette description, un magnétomètre identifié comme étant éliminé est dit « éliminé ».

Lors d'une étape 52, la position de l'objet 10 est estimée. Ici, cette estimation consiste à prendre la position précédemment déterminée.

Ensuite, lors d'une étape 54, les magnétomètres Mᵢⱼ les plus proches de la position estimée sont identifiés.

Dans ce mode de réalisation lors de l'étape 54, le magnétomètre Mᵢⱼ est considéré comme faisant partie des magnétomètres les plus proches de la position estimée si la distance eᵢⱼ qui le sépare de la position estimée est inférieure à un seuil prédéterminé Sb. La valeur du seuil Sb est supérieure ou égale à 2L et, de préférence, supérieure ou égale à 3L. De plus, la valeur de ce seuil est choisie suffisamment petite pour que quelle que soit la position de l'objet 10 par rapport au dispositif 12, la totalité des magnétomètres Mᵢⱼ ne soient jamais comprise dans une sphère de rayons Sb centré sur l'objet 10. Par exemple, de préférence, la valeur du seuil Sb est choisie inférieure à la moitié de la distance entre les deux magnétomètres Mᵢⱼ les plus éloignés l'un de l'autre dans le réseau. Par exemple, ici, la valeur du seuil S_{b} est choisie égale à 3L.

Lors d'une opération 56, pour chaque magnétomètre Mᵢⱼ, la distance eᵢⱼ entre ce magnétomètre et la position estimée est calculée.

Ensuite, lors d'une opération 58, la distance eᵢⱼ calculée est comparée au seuil Sb. Si la distance eᵢⱼ est inférieure au seuil Sb, alors, lors d'une opération 60, ce magnétomètre Sᵢⱼ est identifié comme faisant partie des magnétomètres les plus proches de la position estimée. Ce magnétomètre est alors éliminé.

Si la distance eᵢⱼ est supérieure au seuil Sb, le magnétomètre Mᵢⱼ n'est pas identifié et n'est pas non plus éliminé.

Les opérations 56 à 62 sont réitérées pour chaque magnétomètre Mᵢⱼ.

A l'issue de l'étape 54, tous les magnétomètres pour lesquels la distance eᵢⱼ est inférieure au seuil S_{b} ont été éliminés.

Ensuite, lors d'une étape 66, le calculateur 32 identifie les magnétomètres Mᵢⱼ qui sont les plus éloignés de la position estimée de l'objet 10. Les magnétomètres les plus éloignés sont les magnétomètres, choisis uniquement parmi les magnétomètres qui n'ont pas déjà précédemment été éliminés, qui n'appartiennent pas au groupe des Nₚ magnétomètres les plus proches de la position estimée, où Nₚ est un entier prédéterminé strictement inférieure à N. De préférence, Nₚ est supérieure à dix ou vingt.

Cette étape 66 consiste donc à sélectionner uniquement les magnétomètres les plus proches de la position estimée parmi ceux qui n'ont pas déjà été éliminés. Pour cela, lors d'une opération 68, les magnétomètres Mᵢⱼ non encore éliminés sont classés par ordre croissant ou décroissant en fonction de leur distance eᵢⱼ. Lors de l'opération 68, les distances eᵢⱼ calculées pour les différents magnétomètres sont comparées les unes aux autres.

Ensuite, lors d'une opération 70, le calculateur sélectionne les Nₚ magnétomètres associés aux distances eᵢⱼ les plus petites. En faisant cela, le calculateur sélectionne uniquement les Nₚ magnétomètres les plus proches de la position estimée.

Lors d'une opération 72, les magnétomètres non sélectionnés lors de l'opération 70 sont éliminés.

Éventuellement, en parallèle ou à la place de l'étape 70, lors d'une étape 76, les magnétomètres Mᵢⱼ qui n'appartiennent pas au groupe des Nₙ magnétomètres mesurant le champ magnétique de plus grande norme sont éliminés, où Nₙ est un entier supérieure à dix ou vingt et strictement inférieure à N.

Pour cela, lors d'une opération 78, les magnétomètres non encore éliminés Mᵢⱼ sont classés par ordre croissant ou décroissant de norme du champ magnétique mesuré par ces magnétomètres.

Ensuite, lors d'une opération 80, le calculateur 32 sélectionne les Nₙ premiers magnétomètres dans cette liste de magnétomètres classés par ordre décroissant de norme du champ magnétique mesuré. Par conséquent, en faisant cela, le calculateur 32 sélectionne les Nₙ magnétomètres non encore éliminés et mesurant le plus de signal.

Lors d'une opération 82, les magnétomètres non sélectionnés lors de l'opération 80 sont éliminés.

Ensuite, lors d'une étape 84, le champ magnétique de l'objet 10 est mesuré à l'aide des seuls magnétomètres non éliminés lors des précédentes étapes. De préférence, lors de l'étape 84, les magnétomètres éliminés ne sont pas alimentés de manière à économiser de l'énergie.

Lors d'une étape 86, le calculateur 32 détermine la position et l'orientation de l'objet 10 en utilisant les seules mesures des magnétomètres non éliminés. Par exemple, il élimine du système d'équations les équations contenant des mesures provenant de magnétomètres éliminés. Ensuite, il met en œuvre ce filtre de Kalman pour trouver les nouvelles position et orientation de l'objet 10. A l'issue de l'étape 86, le calculateur 32 restitue sur l'interface 36, la position et l'orientation déterminées pour l'objet 10.

Lors d'une étape 88, l'unité 5 commande l'affichage du curseur 6 sur l'écran 4 en fonction de la position et de l'orientation déterminées lors de l'étape 86. Pour cela, l'unité 5 commande une couche de génération de photons décrite plus en détail en référence à la figure 4. A l'issue de l'étape 88, on retourne à l'étape 51.

La limitation du nombre de mesures utilisées lors de l'étape 86 permet de limiter la puissance de calcul nécessaire à la localisation de l'objet 10. Cette limitation de la puissance de calcul peut alors être mise à profit, par exemple, pour accroître la précision de la localisation en traitant d'avantage de mesures dans le même laps de de temps ou pour accroître la vitesse de calcul et donc pour localiser plus rapidement l'objet 10. De plus, cette limitation du nombre de mesures ne conduit pas à une diminution de la précision de la localisation puisque seules les mesures potentiellement erronées c'est-à-dire celles des magnétomètres les plus proches de la position estimée ou les mesures correspondant aux signaux les plus faibles sont éliminées.

La figure 4 représente un écran 100 tel qu'un écran de téléviseur. Cet écran 100 comporte une dalle 102 en matériau transparent à la lumière visible. Par exemple, la dalle 102 est en verre. Cette dalle présente une face avant 104 tournée vers le spectateur et une face arrière. Ici, la face avant est perpendiculaire à la direction Z qui est dirigée vers le spectateur. Dans la suite de cette description, l'avant et l'arrière de l'écran 100 sont définis par rapport à cette direction Z.

L'écran 100 comporte également une couche 106 de génération de photons pour former chaque pixel sur la dalle 102. Cette couche 106 est placée immédiatement derrière la dalle 102. Différentes technologies sont possibles pour réaliser cette couche 106. De préférence, la technologie retenue consiste en une couche dépourvue de grille métallique. Typiquement, la couche 106 est réalisée à partir de diodes électroluminescentes organiques plus connues sous l'acronyme anglais OLED (Organic Light Emitting Diode).

Enfin, l'écran 100 comporte une interface homme/machine 108. Cette interface est identique à l'interface 2 sauf que l'objet magnétique 10 n'est ici attaché à aucun ustensile. L'objet 10 est placé du côté de la face avant 104 lors de l'utilisation de cette interface 108.

Dans ce mode de réalisation, le dispositif 12 de localisation est quant à lui placé derrière la couche 106. Les lignes i et les colonnes j du réseau de magnétomètres s'étendent parallèlement à la face 104. De préférence, la longueur de la diagonale entre les magnétomètres les plus éloignés du réseau est égale à la diagonale de la face avant 104 à plus ou moins 15 % près ou 5 % près.

Une unité de commande 112 est raccordée à l'interface 36 du dispositif 12. Cette unité 112 est apte à commander la couche 106 pour modifier l'affichage en fonction de la position et/ou de l'orientation acquise par l'interface homme/machine 108. Par exemple, l'unité 112 commande un changement de la chaîne de télévision regardée, un retour en arrière ou une avance rapide ou un agrandissement de l'image en fonction de la position et de l'orientation acquise par l'interface 108. Typiquement, l'unité 112 est capable d'effectuer les commandes classiques appliquées sur un écran mais ici, ces commandes sont déclenchées en réponse à un déplacement de l'objet 10.

On notera que dans le cas décrit ici, la zone d'interaction avec l'écran s'étend au-delà, dans les directions X et Y, de la face avant 104. En effet, la position de l'objet 10 est mesurable même si celui-ci est placé à gauche ou à droite de l'écran dans les directions X ou Y.

La figure 5 représente un écran 120 identique à l'écran 100 sauf que les magnétomètres du dispositif 12 de localisation ne sont pas entièrement placés derrière la couche 106 de génération de photons. Ici, les magnétomètres Mᵢⱼ sont essentiellement disposés autour de la couche 106. Dans ce cas, ces magnétomètres Mᵢⱼ définissent une bande de magnétomètres qui entoure une zone dépourvue de magnétomètre ou de densité plus faible en magnétomètres. Cette bande de magnétomètres est fixée directement sur la dalle 102. Sur la figure 5, la périphérie de la couche 106 est représentée par une ligne en pointillés.

De nombreux autres modes de réalisation sont possibles. L'écran décrit ici peut avoir de nombreuses applications. Par exemple, l'écran peut être utilisé comme un appareil d'acquisition d'un texte ou d'un dessin manuscrit. Dans ce cas, l'objet 10 est fixé sans aucun degré de liberté sur un crayon. L'unité de commande 5 comprend un module pour localiser la pointe du crayon par rapport à la plaque 20 et pour mémoriser chaque position de la pointe lorsque celle-ci est en contact avec la plaque 20. Dans ces conditions, l'unité 5 permet de créer un fichier contenant la trace laissée par la pointe du crayon sur la face supérieure 24. Dans le même temps l'unité 5 affiche sur l'écran le tracé de la pointe.

L'interface homme/machine peut être utilisée pour commander d'autres fonctions d'un écran que la simple position et orientation d'un curseur. Par exemple, l'interface homme/machine peut être utilisée pour déclencher un agrandissement d'une image quand l'objet magnétique se rapproche de la plaque 20 et, inversement, un rétrécissement de l'image quand l'objet magnétique s'éloigne de la plaque 20.

Si la surface du réseau de magnétomètres est suffisamment étendue, l'appareil 2 peut comporter simultanément plusieurs objets magnétiques 10. Dans ce cas, le procédé décrit ci-dessus est appliqué, en parallèle, pour chacun de ces objets magnétiques. La liste des magnétomètres éliminés est alors propre à chaque objet magnétique.

L'unité 30 de traitement peut être incorporée physiquement à l'intérieur de l'appareil commandé au lieu d'être incorporé à l'intérieur de l'interface homme/machine.

En variante, l'unité de commande sélectionne l'algorithme utilisé lors de l'étape 86 pour déterminer la position et/ou l'orientation de l'objet 10 en fonction de la position estimée lors de l'étape 52. Par exemple, si l'objet 10 est très proche du réseau de magnétomètres et que son moment magnétique est vertical, le modèle reliant les mesures des magnétomètres à la position et à l'orientation de l'objet 10 est modifié. Dans ce cas, la modification consiste par exemple à fixer la valeur du moment magnétique de l'objet 10 selon l'axe Z.

D'autres variantes de l'algorithme pour déterminer la position et/ou l'orientation de l'objet 10 sont possibles. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles. Dans une autre variante, les mesures des magnétomètres sont d'abord utilisées pour construire une empreinte magnétique de l'objet 10. L'empreinte construite est ensuite comparée à une base de données d'empreintes magnétiques prédéterminées d'objets connus. Cette base de données associe à chaque objet connu des informations complémentaires comme, par exemple, la valeur de son moment magnétique. Si l'empreinte construite correspond à l'une de celles de la base de données, les informations complémentaires associées à cet objet connu sont alors utilisées pour améliorer ou simplifier la localisation de cet objet lors de l'étape 86.

L'approximation utilisée pour construire le système d'équations peut aussi être une approximation quaternaire ou supérieure, c'est-à-dire que les équations de l'électromagnétisme sont approximées à un ordre supérieur à celui correspondant à l'approximation bipolaire.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone. Il est aussi possible de prévoir des zones de densité plus importante sur la périphérie du réseau pour limiter les effets de bord. Par exemple, le réseau de magnétomètres peut comporter une zone centrale dépourvue de magnétomètre. Dans ce cas, les magnétomètres sont uniquement répartis sur la périphérie de cette zone centrale et forment une bande de magnétomètres qui entoure et délimite la zone centrale. Typiquement, la largeur de cette bande est strictement inférieure à la largeur de la zone centrale mesurée selon la même direction.

En variante, le réseau de magnétomètres ne s'étend que dans une seule direction. Les magnétomètres sont alors disposés les uns après les autres le long d'une seule et même ligne.

A l'inverse, le réseau de magnétomètre peut aussi s'étendre dans trois directions non colinéaires de l'espace. Dans ces conditions, les magnétomètres sont répartis à l'intérieur d'un volume à trois dimensions.

Le nombre N de magnétomètres peut également être supérieur ou égal à soixante-quatre ou quatre-vingt dix.

Tous les magnétomètres du réseau de magnétomètres ne sont pas nécessairement identiques les uns aux autres. En variante, les magnétomètres n'ont pas tous la même sensibilité. Dans ce cas, les magnétomètres moins précis sont par exemple disposés à proximité du centre du réseau tandis que les magnétomètres les plus précis sont disposés sur la périphérie de ce réseau. Un tel mode de réalisation présente l'avantage de placer les magnétomètres les plus difficilement saturables et donc les moins sensibles, aux emplacements susceptibles d'être le plus proche de l'objet magnétique. Cela permet aussi d'étendre la zone d'interaction.

En variante, l'élimination des magnétomètres les plus proches et/ou les plus éloignés de la position estimée ou mesurant la norme du champ magnétique la plus faible peut être omise.

L'élimination des magnétomètres saturés peut être réalisée à d'autres instants. Par exemple, elle peut être réalisée après l'étape 54, 66 ou 76. L'élimination des magnétomètres saturés peut aussi être omise.

L'étape 51 d'élimination des magnétomètres saturés peut aussi être mise en œuvre sans les autres étapes d'élimination de magnétomètres.

Dans une autre variante, seule la position ou seule l'orientation de l'objet magnétique est déterminée.

Les différents traitements décrits ici peuvent être réalisés en post-traitement, c'est-à-dire que dans un premier temps toutes les données mesurées sont enregistrées dans une mémoire, puis l'élimination des mesures de certains magnétomètres est mise en œuvre ultérieurement lors du traitement des données enregistrées.

Dans un autre mode de réalisation, l'estimation de la position de l'objet magnétique lors de l'étape 52 est obtenue à partir d'une mesure d'un autre capteur distinct de ceux appartenant au réseau de magnétomètres. Cet autre capteur est, de préférence, insensible au champ magnétique. Par exemple, il s'agit d'une caméra associée à un module de reconnaissance de forme pour estimer la position de l'objet par rapport au réseau de magnétomètres.

L'écran décrit ici peut être utilisé dans de nombreuses applications comme pour la réalisation d'ordinateurs, de téléphones portables, de tablettes électroniques, de tableaux interactifs ou autres.

## Revendications

1. Écran comportant :
- une dalle (102) transparente,
- une couche (106) de génération de photons pour former chaque pixel lumineux visible à travers la dalle transparente, cette couche étant logée derrière la dalle transparente,
- un dispositif (12) de localisation d'un objet magnétique mobile directement déplaçable à la main par un être humain devant la dalle, et
- une interface (108) homme/machine apte à commander la couche (106) de génération de photons pour modifier l'affichage d'une image par l'écran, cette interface homme/machine comprenant une unité (112) apte à commander la couche (106) de génération de photons pour modifier l'affichage en fonction de la localisation déterminée par le dispositif de localisation, le dit écran étant **caractérisé en ce que** le dispositif de localisation est un dispositif (12) de localisation d'un aimant permanent mobile directement déplaçable à la main par un être humain devant la dalle, ce dispositif comportant à cet effet:
• un réseau de magnétomètres comportant N magnétomètres tri-axes (Mᵢⱼ) reliés mécaniquement les uns aux autres sans aucun degré de liberté pour conserver une distance connue entre chacun de ces magnétomètres, où N est un nombre entier supérieur ou égal à cinq, et
• une unité électronique (30) de traitement apte à déterminer la position et/ou l'orientation de l'aimant permanent à partir des mesures des magnétomètres de ce réseau, cette position et/ou orientation déterminées étant la localisation déterminée par le dispositif de localisation.

2. Écran selon la revendication 1, dans lequel le nombre N est supérieur ou égal à seize.

3. Écran selon l'une quelconque des revendications précédentes, dans lequel le réseau de magnétomètres du dispositif (12) de localisation est logé derrière la couche (106) de génération de photons du côté opposé à la dalle (102).

4. Écran selon la revendication 3, dans lequel les magnétomètres sont disposés dans un même plan et répartis dans ce plan de manière à former plusieurs colonnes de magnétomètres parallèles les unes aux autres.

5. Écran selon l'une quelconque des revendications 1 à 2, dans lequel les magnétomètres du réseau de magnétomètres sont disposés à l'intérieure d'une bande qui encercle la périphérie extérieure de la couche (106) de génération de photons et aucun des magnétomètres du réseau de magnétomètres n'est disposés devant ou derrière la couche de génération de photons dans une direction perpendiculaire à cette couche.

6. Écran selon l'une quelconque des revendications précédentes, dans lequel l'unité électronique (30) est programmée pour :
a) estimer la position de l'aimant permanent par rapport au réseau de magnétomètres,
b) calculer la distance entre chaque magnétomètre et la position estimée de l'aimant permanent, puis
c) éliminer les Nᵢ magnétomètres les plus proches ou les Nₑ magnétomètres les plus éloignés de cette position estimée, où Nᵢ + Nₑ est un nombre entier positif strictement inférieur à N,
d) acquérir la mesure du champ magnétique généré ou modifié par l'aimant permanent réalisée par chaque magnétomètre non éliminé, et
e) déterminer la position ou l'orientation de l'aimant permanent à partir des seules mesures des magnétomètres non éliminés.

7. Ensemble, **caractérisé en ce qu'**il comporte :
- un écran conforme à l'une quelconque des revendications précédentes, et
- un aimant permanent mobile (10) apte à être localisé par le dispositif de localisation.

8. Procédé de commande de l'affichage d'un écran équipé d'une dalle transparente et d'une couche de génération de photons pour former chaque pixel lumineux visible à travers la dalle transparente, cette couche étant logée derrière la dalle transparente, ce procédé comprenant :
- le déplacement d'un objet magnétique mobile directement à la main par un être humain devant la dalle,
- la localisation de l'objet magnétique mobile directement déplaçable à la main par un être humain devant la dalle, et
- la commande de la couche (106) de génération de photons pour modifier l'affichage d'une image par l'écran en utilisant à cet effet une unité (112) apte à commander la couche (106) de génération de photons pour modifier l'affichage en fonction de la localisation déterminée de l'objet magnétique,
le dit procédé étant **caractérisé en ce qu'**il comprend :
- la mesure (84) du champ magnétique généré ou modifié par l'aimant permanent par plusieurs magnétomètres d'un réseau de magnétomètres comportant N magnétomètres tri-axes reliés mécaniquement les uns aux autres sans aucun degré de liberté pour conserver une distance connue entre chacun de ces magnétomètres, où N est un nombre entier supérieur ou égal à cinq, et
- la détermination (86), par une unité électronique de traitement, de la position et/ou de l'orientation de l'aimant permanent à partir des mesures des magnétomètres de ce réseau, cette position et/ou orientation déterminées étant la localisation déterminée de l'objet magnétique.

9. Procédé selon la revendication 8, dans lequel le procédé comporte :
a) l'estimation (52) de la position de l'aimant permanent par rapport au réseau de magnétomètres,
b) le calcul (56) de la distance entre chaque magnétomètre et la position estimée de l'aimant permanent, puis
c) l'élimination (60, 72, 82) des Nᵢ magnétomètres les plus proches ou des Nₑ magnétomètres les plus éloignés de cette position estimée, où Nᵢ + Nₑ est un nombre entier positif strictement inférieur à N,
d) la mesure (84) du champ magnétique généré ou modifié par l'aimant permanent par chaque magnétomètre non éliminé, et
e) la détermination (86) de la position et/ou de l'orientation de l'aimant permanent à partir des seules mesures des magnétomètres qui n'ont pas été éliminés.

10. Procédé selon la revendication 9, dans lequel lors de l'étape (84) de mesure, les magnétomètres éliminés ne sont pas alimentés.

11. Support d'enregistrement d'informations, **caractérisé en ce qu'**il comporte des instructions pour la mise en œuvre d'un procédé de commande conforme à l'une quelconque des revendications 8 à 10, lorsque ces instructions sont exécutées par un calculateur électronique.

## Patentansprüche

1. Bildschirm, welcher aufweist:
- eine durchsichtige Platte (102),
- eine Schicht (106) zur Erzeugung von Photonen, um die einzelnen Lichtpixel zu bilden, die durch die durchsichtige Platte hindurch sichtbar sind, wobei diese Schicht hinter der durchsichtigen Platte angeordnet ist,
- eine Vorrichtung (12) zur Lokalisierung eines beweglichen magnetischen Objekts, das durch eine Person vor der Platte direkt von Hand bewegbar ist,
- eine Mensch-Maschine-Schnittstelle (108), die geeignet ist, die Schicht (106) zur Erzeugung von Photonen zu steuern, um die Anzeige eines Bildes durch den Bildschirm zu verändern, wobei diese Mensch-Maschine-Schnittstelle eine Einheit (112) umfasst, die geeignet ist, die Schicht (106) zur Erzeugung von Photonen zu steuern, um die Anzeige in Abhängigkeit von dem durch die Lokalisierungsvorrichtung bestimmten Ort zu verändern,
wobei der Bildschirm **dadurch gekennzeichnet ist, dass** die Lokalisierungsvorrichtung eine Vorrichtung (12) zur Lokalisierung eines beweglichen Permanentmagneten ist, der durch eine Person vor der Platte direkt von Hand bewegbar ist, wobei diese Vorrichtung zu diesem Zweck aufweist:
• ein Netz von Magnetometern, das N dreiachsige Magnetometer (Mᵢⱼ) aufweist, die ohne einen Freiheitsgrad mechanisch miteinander verbunden sind, um einen bekannten Abstand zwischen allen diesen Magnetometern aufrechtzuerhalten, wobei N eine ganze Zahl größer oder gleich fünf ist, und
• eine elektronische Verarbeitungseinheit (30), die geeignet ist, die Position und/oder die Ausrichtung des Permanentmagneten aus den Messwerten der Magnetometer dieses Netzes zu bestimmen, wobei diese bestimmte Position und/oder Ausrichtung der von der Lokalisierungsvorrichtung bestimmte Ort ist.

2. Bildschirm nach Anspruch 1, wobei die Anzahl N größer oder gleich sechzehn ist.

3. Bildschirm nach einem der vorhergehenden Ansprüche, wobei das Netz von Magnetometern der Lokalisierungsvorrichtung (12) hinter der Schicht (106) zur Erzeugung von Photonen auf der zur Platte (102) gegenüberliegenden Seite angeordnet ist.

4. Bildschirm nach Anspruch 3, wobei die Magnetometer in ein und derselben Ebene angeordnet sind und in dieser Ebene so verteilt sind, dass mehrere zueinander parallele Spalten von Magnetometern gebildet werden.

5. Bildschirm nach einem der Ansprüche 1 bis 2, wobei die Magnetometer des Netzes von Magnetometern im Inneren eines Streifens angeordnet sind, welcher den Außenumfang der Schicht (106) zur Erzeugung von Photonen umgibt, und keines der Magnetometer des Netzes von Magnetometern vor oder hinter der Schicht zur Erzeugung von Photonen angeordnet ist, bezogen auf eine zu dieser Schicht senkrechte Richtung.

6. Bildschirm nach einem der vorhergehenden Ansprüche, wobei die elektronische Einheit (30) dafür programmiert ist:
a) die Position des Permanentmagneten in Bezug auf das Netz von Magnetometern zu schätzen,
b) den Abstand zwischen jedem Magnetometer und der geschätzten Position des Permanentmagneten zu berechnen, danach
c) die Nᵢ Magnetometer, die dieser geschätzten Position am nächsten sind, oder die Nₑ Magnetometer, die von ihr am entferntesten sind, zu eliminieren, wobei Nᵢ + Nₑ eine positive ganze Zahl ist, die streng kleiner als N ist,
d) den Messwert des von dem Permanentmagneten erzeugten oder veränderten Magnetfeldes, den jedes nicht eliminierte Magnetometer erhalten hat, zu erfassen, und
e) die Position oder die Ausrichtung des Permanentmagneten nur aus den Messwerten der nicht eliminierten Magnetometer zu bestimmen.

7. Anordnung, **dadurch gekennzeichnet, dass** sie aufweist:
- einen Bildschirm gemäß einem der vorhergehenden Ansprüche, und
- einen beweglichen Permanentmagneten (10), der geeignet ist, von der Lokalisierungsvorrichtung lokalisiert zu werden.

8. Verfahren zur Steuerung der Anzeige eines Bildschirms, der mit einer durchsichtigen Platte und einer Schicht zur Erzeugung von Photonen, um die einzelnen Lichtpixel zu bilden, die durch die durchsichtige Platte hindurch sichtbar sind, ausgestattet ist, wobei diese Schicht hinter der durchsichtigen Platte angeordnet ist, wobei dieses Verfahren umfasst:
- die Bewegung eines beweglichen magnetischen Objekts direkt von Hand durch eine Person vor der Platte,
- die Lokalisierung des beweglichen magnetischen Objekts, das durch eine Person vor der Platte direkt von Hand bewegbar ist, und
- die Steuerung der Schicht (106) zur Erzeugung von Photonen, um die Anzeige eines Bildes durch den Bildschirm zu verändern, wobei zu diesem Zweck eine Einheit (112) verwendet wird, die geeignet ist, die Schicht (106) zur Erzeugung von Photonen zu steuern, um die Anzeige in Abhängigkeit von dem bestimmten Ort des magnetischen Objekts zu verändern,
wobei das Verfahren **dadurch gekennzeichnet ist, dass** es umfasst:
- die Messung (84) des von dem Permanentmagneten erzeugten oder veränderten Magnetfeldes durch mehrere Magnetometer eines Netzes von Magnetometern, das N dreiachsige Magnetometer aufweist, die ohne einen Freiheitsgrad mechanisch miteinander verbunden sind, um einen bekannten Abstand zwischen allen diesen Magnetometern aufrechtzuerhalten, wobei N eine ganze Zahl größer oder gleich fünf ist, und
- die Bestimmung (86), durch eine elektronische Verarbeitungseinheit, der Position und/oder der Ausrichtung des Permanentmagneten aus den Messwerten der Magnetometer dieses Netzes, wobei diese bestimmte Position und/oder Ausrichtung der bestimmte Ort des magnetischen Objekts ist.

9. Verfahren nach Anspruch 8, wobei das Verfahren umfasst:
a) die Schätzung (52) der Position des Permanentmagneten in Bezug auf das Netz von Magnetometern,
b) die Berechnung (56) des Abstands zwischen jedem Magnetometer und der geschätzten Position des Permanentmagneten, danach
c) die Eliminierung (60, 72, 82) der Nᵢ Magnetometer, die dieser geschätzten Position am nächsten sind, oder der Nₑ Magnetometer, die von ihr am entferntesten sind, wobei Nᵢ + Nₑ eine positive ganze Zahl ist, die streng kleiner als N ist,
d) die Messung (84) des von dem Permanentmagneten erzeugten oder veränderten Magnetfeldes durch jedes nicht eliminierte Magnetometer, und
e) die Bestimmung (86) der Position und/oder der Ausrichtung des Permanentmagneten nur aus den Messwerten der Magnetometer, welche nicht eliminiert worden sind.

10. Verfahren nach Anspruch 9, wobei im Schritt (84) der Messung die eliminierten Magnetometer nicht mit Strom versorgt werden.

11. Informationsaufzeichnungsmedium, **dadurch gekennzeichnet, dass** es Anweisungen zur Durchführung eines Verfahrens zur Steuerung nach einem der Ansprüche 8 bis 10, wenn diese Anweisungen von einem elektronischen Rechner ausgeführt werden, umfasst.

## Claims

1. Screen comprising:
- a transparent panel (102),
- a photon-generating layer (106) in order to form each luminous pixel visible through the transparent panel, this layer being housed behind the transparent panel,
- a device (12) for localizing a movable magnetic object able to be moved directly by hand by a human being in front of the panel, and
- a human/machine interface (108) able to control the photon-generating layer (106) in order to modify the display of an image by the screen, this human/machine interface comprising a unit (112) able to control the photon-generating layer (106) in order to modify the display depending on the localization determined by the localizing device,
said screen being **characterized in that** the localizing device is a device (12) for localizing a movable permanent magnet able to be moved directly by hand by a human being in front of the panel, this device comprising for this purpose:
• a network of magnetometers comprising N tri-axis magnetometers (Mᵢⱼ) mechanically connected to one another with no degree of freedom in order to maintain a known distance between each of these magnetometers, where N is a whole number higher than or equal to five, and
• an electronic processing unit (30) able to determine the position and/or the orientation of the permanent magnet from the measurements of the magnetometers of this network, this determined position and/or determined orientation being the localization determined by the localizing device.

2. Screen according to Claim 1, in which the number N is higher than or equal to sixteen.

3. Screen according to either one of the preceding claims, in which the network of magnetometers of the localizing device (12) is housed behind the photon-generating layer (106) on the side opposite the panel (102).

4. Screen according to Claim 3, in which the magnetometers are placed in a given plane and distributed in this plane so as to form a plurality of columns of magnetometers that are parallel to one another.

5. Screen according to either one of Claims 1 and 2, in which the magnetometers of the network of magnetometers are arranged inside a strip that encircles the external periphery of the photon-generating layer (106) and none of the magnetometers of the network of magnetometers is placed in front of or behind the photon-generating layer in a direction perpendicular to this layer.

6. Screen according to any one of the preceding claims, in which the electronic unit (30) is programmed to:
a) estimate the position of the permanent magnet relative to the network of magnetometers,
b) calculate the distance between each magnetometer and the estimated position of the permanent magnet, then
c) eliminate the Nᵢ magnetometers closest to or the Nₑ magnetometers furthest from this estimated position, where Nᵢ + Nₑ is a positive whole number strictly lower than N,
d) acquire the measurement of the magnetic field generated or modified by the permanent magnet, taken by each non-eliminated magnetometer, and
e) determine the position or the orientation of the permanent magnet from the measurements alone of the non-eliminated magnetometers.

7. Assembly, **characterized in that** it comprises:
- a screen according to any one of the preceding claims, and
- a movable permanent magnet (10) able to be localized by the localizing device.

8. Method for controlling the display of a screen equipped with a transparent panel and with a photon-generating layer in order to form each luminous pixel visible through the transparent panel, this layer being housed behind the transparent panel, this method comprising:
- a human being moving a movable magnetic object directly by hand in front of the panel,
- localizing the movable magnetic object able to be moved directly by hand by a human being in front of the panel, and
- controlling the photon-generating layer (106) in order to modify the display of an image by the screen by using, to this end, a unit (112) able to control the photon-generating layer (106) in order to modify the display depending on the determined localization of the magnetic object
said method being **characterized in that** it comprises:
- measuring (84) the magnetic field generated or modified by the permanent magnet with a plurality of magnetometers of a network of magnetometers comprising N tri-axis magnetometers mechanically connected to one another with no degree of freedom in order to maintain a known distance between each of these magnetometers, where N is a whole number higher than or equal to five, and
- determining (86), with an electronic processing unit, the position and/or the orientation of the permanent magnet from the measurements of the magnetometers of this network, this determined position and/or determined orientation being the determined localization of the magnetic object.

9. Method according to Claim 8, in which the method comprises:
a) estimating (52) the position of the permanent magnet relative to the network of magnetometers,
b) calculating (56) the distance between each magnetometer and the estimated position of the permanent magnet, then
c) eliminating (60, 72, 82) the Nᵢ magnetometers closest to or the Nₑ magnetometers furthest from this estimated position, where Nᵢ + Nₑ is a positive whole number strictly lower than N,
d) measuring (84) the magnetic field generated or modified by the permanent magnet with each non-eliminated magnetometer, and
e) determining (86) the position and/or the orientation of the permanent magnet from the measurements alone of the magnetometers that have not been eliminated.

10. Method according to Claim 9, in which, in the measuring step (84), the eliminated magnetometers are turned off.

11. Data storage medium, **characterized in that** it contains instructions for implementing a control method according to any one of Claims 8 to 10, when these instructions are executed by an electronic processor.
